# EUROPEAN PATENT SPECIFICATION

(11) **EP 1 566 922 B1**
(45) Date of publication and mention of the grant of the patent: **12.08.2009**
(21) Application number: 04003850.7
(22) Date of filing: 20.02.2004
(51) Int. Cl.: H04W 72/12

(54) **Method for providing traffic differentiation in a wireless LAN environment and corresponding wireless LAN station**
Verfahren zur Bereitstellung von differentiertem Verkehr in einer drahtlosen Lokalbereichsnetzwerkumgebung und korrespondierende drahtlose Lokalbereichsnetzwerkstation
Méthode pour fournir une différentiation du traffic dans un réseau local sans fil et station correspondante d'un réseau local sans fil

(43) Date of publication of application: 24.08.2005
(73) Proprietor: Alcatel Lucent, 75008 Paris (FR)
(72) Inventor: Conte, Alberto, 75014 Paris (FR); Casetti, Claudio, 10139 Torino (IT); Chiasserini, Carla-Fabiana, 10139 Torino (IT)
(74) Representative: Wetzel, Emmanuelle

(56) References cited:
- PONG D. ET AL: "Using Transmission Opportunities and Judicious Parameter Selection in Enhancing Real-time Applications over 802.11 Wireless LANs" 2003 AUSTRALIAN TELECOMMUNICATIONS, NETWORKS AND APPLICATIONS CONFERENCE, [Online] 8 December 2003 (2003-12-08), pages 1-5, XP002295835 MELBOURNE, AU Retrieved from the Internet: URL:http://atnac2003.atcrc.com/ORALS/pong1 .pdf> [retrieved on 2004-09-10]
- KUEHNEL T ET AL: "IEEE P802.11 Wireless LANs; Wireless Multimedia Enhancements (WME)"[Online] 11 July 2003 (2003-07-11), pages 1-30, XP002295836 Retrieved from the Internet: URL:grouper.ieee.org/groups/802/11/Documen ts/DocumentHolder/2003/802wirelessworld/11 -03-0504-00-000e-wireless-multimedia-exten sions-%28wme%29.rtf> [retrieved on 2004-09-10]
- LIM L W ET AL: "A QoS Scheduler for IEEE 802.11e WLANs" 1ST IEEE CONSUMER AND NETWORKING CONFERENCE, 5 January 2004 (2004-01-05), pages 199-204, XP010696824
- JIE HUI ET AL: "Designing Improved MAC Packet Schedulers for 802.11e WLAN" IEEE GLOBAL TELECOMMUNICATIONS CONFERENCE, vol. 1, 1 December 2003 (2003-12-01), pages 184-189, XP010677870 PISCATAWAY, NJM, USA

## Description

### BACKGROUND OF THE INVENTION

The present invention relates to a method for providing traffic differentiation in a wireless LAN environment and to a corresponding wireless LAN station.

802.11e standard related to wireless LANs provides for traffic differentiation in wireless LAN environment using the EDCA (Enhanced Distributed Channel Access) mechanism. EDCA mechanism relays on the defining of virtual queues inside a wireless LAN station (i.e. user terminal or access point). Each queue competes against the others to access the transmission medium. For controlling the transmission opportunity, each virtual queue is associated a so called access category consisting in a set of three parameters defined in IEEE 802.11e standard: first parameter is Contention Window (CW) parameter, second parameter is the Arbitration Inter Frame Space (AIFS) parameter, third parameter is the Transmission Opportunity Limit (TXOP_Limit) parameter. Setting these three parameters adequately enables it to define higher or lower priorities for the different virtual queues to access the transmission medium.

Usually, the traffic differentiation is performed depending on the traffic type. For example, preferably, voice traffic may constitute one access category with a high transmission priority to ensure that real time constraints are respected, video traffic may constitute a second access category with a lower priority and data traffic a third category with a still lower priority so that best effort is applied to this type of traffic.

The table below shows an example for the AIFS and CW values chosen for defining three access categories for three different types of traffic.

| Access Category (AC) | Arbitration Inter Frame Space (AIFS) | Contention Window (CWmin :CW max) | Type of Traffic (TT) |
|---|---|---|---|
| AC0 | 50 µs | 3:31 | Voice |
| AC1 | 50 µs | 15:63 | Video |
| AC2 | 50 µs | 31:255 | Data (best effort) |

A drawback is that the traffic differentiation based on traffic type only does not provide an efficient traffic differentiation for achieving an optimal radio resource utilization and guarantying an acceptable quality of service.

Still according to the present invention, a method for providing traffic differentiation in a wireless LAN, said method comprising the step of defining a plurality of access categories each associated with a priority value for the traffic it relates to, at least one access category relating to downlink traffic and at least one access category renting to uplink traffic, and said downlink traffic has a higher priority than said corresponding uplink traffic is disclosed.

Further according to the present intention, a wireless LAN station comprising virtual queues for performing traffic differentiation and a scheduler for granting transmission authorizations to said virtual queues, said wireless LAN station comprising at least two virtual queues, enabling it to differentiate uplink and downlink traffic, said wireless LAN station and said downlink traffic has a higher priority than said corresponding uplink traffic is disclosed.

Document Pong D. et al. : « Using Transmission Opportunities and Judicious Parameter Selection in Enhancing Real Time Applications over 802.11 Wireless LANs » 2003 AUSTRALIAN TELECOMMUNICATIONS, NETWORKS AND APPLICATIONS CONFERENCE discloses performance evaluations of the 802.11e contention based access mechanism called Enhanced Distributed Channel Access. This document analyses the impact of the setting of CW and TXOP parameters for different access categories on the network capacity.

A particular object of the present invention is to provide a method of traffic differentiation in a wireless LAN environment providing for fair priorities to the different traffics.

Another object of the invention is to provide a corresponding wireless LAN station.

### SUMMARY OF THE INVENTION

These objects, and others that appear below, are achieved by a method for providing traffic differentiation according to claim 1, a wireless LAN station according to claim 5.

According to the present invention, the method consists in performing a traffic differentiation depending on the traffic direction (i.e. downlink or uplink traffic). In a 802.11 WLAN infrastructure, uplink traffic is usually defined as the traffic going from a user terminal to an access point and downlink traffic the traffic going from an access point to a user terminal.

The method according to the present invention presents the advantage to reduce the unfairness between the uplink and the downlink direction. Indeed, it has been observed by simulation of the prior art methods that downlink traffic experiences higher delay and jitter and more generally worse performance than the uplink traffic inside an identical traffic type since downlink traffic is served by a single instance of the access protocol while in uplink there are as many protocol instances as the number of user terminals

The method according to the present invention further presents the advantage to provide a better use of the radio resources available in an 802.11 enabled wireless LAN resulting in a cost reduction and in a higher client satisfaction.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a wireless LAN system providing traffic differentiation according to the present invention;
- Figure 2 shows an implementation of the method according to the present invention;
- Figure 3 shows an implementation of a wireless LAN station according to the present invention.

### DETAILED DESCRIPTION OF THE INVENTION

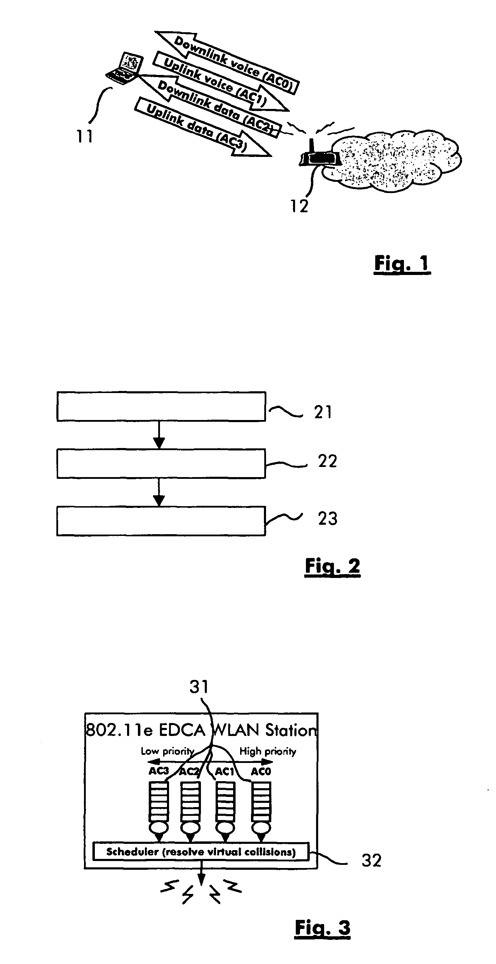

Figure 1 shows a wireless LAN system providing traffic differentiation according to the present invention. Wireless LAN system comprises a wireless LAN terminal 11 and a wireless LAN access point 12. Additional non represented wireless LAN terminals and access points may also be part of the wireless LAN system.

Wireless LAN terminal 11 and access point 12 exchange traffic of different types (e.g. voice, video, data). According to the present invention, the wireless LAN terminal and the access point differentiate between traffic sent in the uplink and traffic sent in the downlink. Access category AC0 corresponds to downlink voice while access category AC1 corresponds to uplink voice. Access category AC2 corresponds to downlink data and access category AC3 corresponds to uplink data. It will be understood by a person skilled in the art that this configuration corresponds to a non binding but advantageous example. It could be envisaged to define more than four access categories and to differentiate also video and data traffic type in uplink and downlink.

According to the present invention, it is advantageous to associate different priorities to the different access categories in order to ensure a fair transmission of the different traffic.

The priority of the different access categories is set with the help of three parameters related to an access category i.e. contention window (CW) parameter, Arbitration Inter Frame Space (AIFS) parameter, and Transmission Opportunity Limit (TXOP_Limit) parameter. Contention window parameter comprises a minimum limit CWmin and a maximum limit CWmax for the contention window size.

Preferably, the contention window parameter, the Arbitration Inter Frame Space parameter, and the Transmission Opportunity Limit parameter are optimized using simulation tools in order to provide the best appropriate fairness for the different traffics.

For example, when four access categories are defined comprising an access category for downlink voice with the highest priority, an access category for uplink voice with a lower priority, an access category for video with a still lower priority and an access category for data with a still lower priority the CW and AIFS parameters are preferably set as given in the next table.

| Access Category (AC) | Arbitration Inter Frame Space (AIFS) | Contention Window (CWmin : CWmax) | Type of Traffic (TT) |
|---|---|---|---|
| AC0 | 30 µs | 3:255 | Downlink Voice |
| AC1 | 50 µs | 7:511 | Uplink Voice |
| AC2 | 50 µs | 31:1023 | Downlink Data |
| AC3 | 70 µs | 63:4095 | Uplink Data |

Preferably, the indication related to the access category of the transmitted traffic is contained in a header field of the frames transporting the traffic.

Preferably, the field indicating the access category is a 2-bit field, enabling it to define four access categories as already foreseen in the IEEE 802.11e standard.

Alternatively, as foreseen in the 802.11e Draft the access category is identified by a 4-bit value called TID (Traffic Identifier), the TID value is reported in the header field of the frames transporting traffic (4-bits) instead of the access category itself.

Nevertheless, it will be understood by a person skilled in the art that this field may be larger if there is a need for defining additional access categories.

Figure 2 shows an implementation of the method according to the present invention. In an exemplary implementation, the method according to the present invention comprises following steps:
Step 21 consists in checking if the traffic to be transmitted is voice, video or data traffic;
Step 22 consists in checking in case of voice traffic if this traffic is downlink or uplink traffic (i.e. if the traffic is sent by a WLAN terminal the traffic is uplink voice traffic and if the traffic is sent by a WLAN access point the traffic is downlink traffic);
Step 23 consists in granting an higher probability to downlink traffic than to uplink traffic in that a corresponding field of the header frames transporting the traffic is set to the corresponding access category.

Figure 3 shows an implementation of a wireless LAN station according to the present invention.

Wireless LAN station comprises as many virtual queues 31 as defined access categories.

In a preferred embodiment of the present invention, four access categories AC0, ..., AC3 are defined.

Additionally the virtual queues are connected to a scheduler 32 which controls the access of the different virtual queues to the transmission medium according to the priority associated to the different virtual queues.

According to an example, wireless LAN station comprises either one virtual queue AC0 exclusively dedicated to downlink traffic or one virtual queue AC1 exclusively dedicated to uplink traffic.

In a preferred embodiment of the present invention, AC0 is dedicated to voice downlink traffic and AC1 to voice uplink traffic. Voice downlink traffic being granted an higher priority that voice uplink traffic.

These two different virtual queues, although located on different types of wireless stations (user terminal or access point), grant prioritized access thanks to the different parameters associated to them.

It will be understood by those skilled in the art that the wireless LAN station according to the present invention may be a wireless LAN terminal as well as a wireless LAN access point.

## Claims

1. Method for providing traffic differentiation in a wireless LAN, said method comprising the step of defining a plurality of access categories each associated with a priority value for the traffic it relates to, at least one access category relating to downlink traffic and at least one access category relating to uplink traffic, said method being **characterised in that** said downlink traffic has a higher priority than said corresponding uplink traffic.

2. Method according to claim 1, wherein one access category is downlink voice and another access category is uplink voice.

3. Method according to claim 1, wherein said access category is constituted of three parameters according to standard IEEE 802.11e : Contention window parameter, Arbitration Inter Frame Space parameter, and Transmission Opportunity Limit parameter, the value of said three parameters being selected depending on said priority value.

4. Method according to claim 1, wherein said access category is specified in the frame exchanged between wireless LAN stations in a predefined header field.

5. Wireless LAN station comprising virtual queues for performing traffic differentiation and a scheduler for granting transmission authorizations to said virtual queues, said wireless LAN station comprising at least two virtual queues enabling it to differentiate uplink and downlink traffic, said wireless LAN station being **characterised in that** said downlink traffic has a higher priority than said corresponding uplink traffic.

6. Wireless LAN station according to claim 5 being a wireless LAN terminal.

7. Wireless LAN station according to claim 5 being an access point.

## Patentansprüche

1. Verfahren zum Gewährleisten einer Differenzierung des Verkehrs in einem drahtlosen LAN, wobei das besagte Verfahren den Schritt des Definierens einer Vielzahl von Zugriffskategorien umfasst, wobei jeder Zugriffskategorie ein Prioritätswert für den die besagte Zugriffskategorie betreffenden Verkehr zugeordnet ist, wobei mindestens eine Zugriffskategorie den Downlink-Verkehr und mindestens eine Zugriffskategorie den Uplink-Verkehr betrifft, wobei das besagte Verfahren **dadurch gekennzeichnet ist, dass** der besagte Downlink-Verkehr eine höhere Priorität hat als der besagte entsprechende Uplink-Verkehr.

2. Verfahren nach Anspruch 1, wobei eine Zugriffskategorie Downlink-Sprachverkehr und eine andere Zugriffskategorie Uplink-Sprachverkehr ist.

3. Verfahren nach Anspruch 1, wobei die besagte Zugriffskategorie aus drei Parametern gemäß dem IEEE 802.11e-Standard besteht: Contention Window-Parameter, Arbitration Interframe Space-Parameter und Transmission Opportunity Limit-Parameter, wobei der Wert der besagten drei Parameter in Abhängigkeit von dem besagten Prioritätswert ausgewählt wird.

4. Verfahren nach Anspruch 1, wobei die besagte Zugriffskategorie in dem zwischen drahtlosen LAN-Stationen in einem vorgegebenen Kopffeld ausgetauschten Rahmen spezifiziert wird.

5. Drahtlose LAN-Station mit virtuellen Warteschlangen für das Ausführen einer Differenzierung des Verkehrs, und einem Zeitplaner zum Bewilligen von Übertragungsgenehmigungen an die besagten virtuellen Warteschlangen, wobei die besagte drahtlose LAN-Station mindestens zwei virtuelle Warteschlangen umfasst, um zwischen Uplink- und Downlink-Verkehr zu unterscheiden, wobei die besagte drahtlose LAN-Station **dadurch gekennzeichnet ist, dass** der besagte Downlink-Verkehr eine höhere Priorität hat als der besagte entsprechende Uplink-Verkehr.

6. Drahtlose LAN-Station nach Anspruch 5, wobei diese ein drahtloses LAN-Endgerät ist.

7. Drahtlose LAN-Station nach Anspruch 5, wobei diese ein Zugriffspunkt ist.

## Revendications

1. Procédé de différenciation de trafic dans un réseau local sans fil, ledit procédé comprenant l'étape de définition d'une pluralité de catégories d'accès, chacune étant associée à une valeur de priorité pour le trafic auquel elle est associée, au moins une catégorie d'accès concernant le trafic descendant et au moins une catégorie d'accès concernant le trafic montant, ledit procédé étant **caractérisé en ce que** ledit trafic descendant a une priorité plus élevée que ledit trafic montant correspondant.

2. Procédé selon la revendication 1, dans lequel une catégorie d'accès est la voix en liaison descendante et une autre catégorie d'accès est la voix en liaison montante.

3. Procédé selon la revendication 1, dans lequel ladite catégorie d'accès est constituée de trois paramètres conformément à la norme IEEE 802.11e : Paramètre de fenêtre de collision, paramètre d'espace d'arbitrage inter-trames et paramètre de limite d'opportunité de transmission, la valeur desdits trois paramètres étant sélectionnée en fonction de ladite valeur de priorité.

4. Procédé selon la revendication 1, dans lequel ladite catégorie d'accès est spécifiée dans la trame échangée entre des stations du réseau local sans fil dans un champ d'en-tête prédéfini.

5. Station de réseau local sans fil comprenant des files d'attente virtuelles pour effectuer une différenciation de trafic et un planificateur pour garantir les autorisations de transmission auxdites files d'attente virtuelles, ladite station de réseau local sans fil comprenant au moins deux files d'attente virtuelles lui permettant de faire la différence entre trafic montant et trafic descendant, ladite station de réseau local sans fil étant **caractérisée en ce que** ledit trafic descendant a une priorité plus élevée que ledit trafic montant correspondant.

6. Station de réseau local sans fil selon la revendication 5, étant un terminal de réseau local sans fil.

7. Station de réseau local sans fil selon la revendication 5, étant un point d'accès.
